# EUROPEAN PATENT APPLICATION

(11) **EP 3 667 066 A1**
(43) Date of publication of application: **17.06.2020**
(21) Application number: 18212372.9
(22) Date of filing: 13.12.2018
(51) Int. Cl.: F03D 7/02

(54) **REDUCTION OF OSCILLATING WIND TURBINE ROTOR BLADE MOVEMENTS**

(71) Applicant: Siemens Gamesa Renewable Energy A/S, 7330 Brande (DK)
(72) Inventor: Egedal, Per, 7400 Herning (DK); Hoegh, Gustav, 7100 Vejle (DK); Jensen, Dennis Stachniuk, DK / 7330 Brande (DK)
(74) Representative: Aspacher, Karl-Georg

(57) **Abstract**

There is described a method of reducing oscillating movement in a wind turbine rotor blade, the rotor blade comprising a plurality of adaptive flow regulating devices arranged along the rotor blade. The method comprises (a) obtaining a sensor signal indicative of rotor blade movement, (b) detecting an oscillating rotor blade movement based on the sensor signal, and (c) controlling the adaptive flow regulating devices to reduce the detected oscillating rotor blade movement. Further, an arrangement and a wind turbine comprising such an arrangement are described.

## Description

### Field of Invention

The present invention relates to the field of wind turbines, in particular to a method of reducing oscillating movement in a wind turbine rotor blade, an arrangement for reducing oscillating movement in a wind turbine rotor blade, and a wind turbine comprising such an arrangement.

### Art Background

Wind turbine blades have several motion modes, which in case of insufficient damping may cause instability, in particular in form of undesirable vibrations. Such instability can lead to excessive oscillating blade vibrations which may damage the blade structure.

The problems caused by instability can be addressed by passive or active damping. Passive damping can be provided by modifying the structural design of the blade, which may result in significant additional costs. Known approaches involving active damping comprises stopping the wind turbine or changing the wind turbine operation state by changing operational parameters, such as rotational speed, power and/or pitch angle, in response to detecting oscillations. US 2012/257967 A1 describes a method of damping edgewise oscillation modes by adjustment of the blade pitch angle. However, this method will cause additional wear on the pitch bearing and the pitch system.

There may thus be a need for a simple and effective way of reducing blade oscillations without the drawbacks mentioned above.

### Summary of the Invention

This need may be met by the subject matter according to the independent claims. Advantageous embodiments of the present invention are described by the dependent claims.

According to a first aspect of the invention, there is provided a method of reducing oscillating movement in a wind turbine rotor blade, the rotor blade comprising one or more adaptive flow regulating devices arranged along the rotor blade. The method comprises (a) obtaining a sensor signal indicative of rotor blade movement, (b) detecting an oscillating rotor blade movement based on the sensor signal, and (c) controlling the adaptive flow regulating devices to reduce the detected oscillating rotor blade movement.

This aspect of the invention is based on the idea that the adaptive flow regulating devices are controlled to counteract undesirable blade movement. The adaptive flow regulating devices are arranged along the rotor blade, i.e. they are distributed in the length direction of the rotor blade. Each adaptive flow regulating device is capable of influencing the aerodynamic and fluid dynamic properties of the rotor blade within the specific region of the rotor blade surface where the adaptive flow regulating device is arranged. In other words, the adaptive flow regulating devices can be controlled to dampen or increase local blade movement (i.e. movement of a corresponding section of the rotor blade) in a given direction relative to the rotor blade. Accordingly, it is possible to counteract and thereby reduce even complex patterns of oscillating movement across the rotor blade length.

In the present context, the term "adaptive flow regulating device" may in particular denote a device capable of influencing the flow characteristics at a given section of the rotor blade surface. In some embodiments, the adaptive flow regulating devices may be implemented as adjustable spoilers or flaps, which may e.g. be selectively and adjustably raised (e.g. by pneumatic actuation) above the surface of the rotor blade.

In the present context, the term "sensor signal indicative of blade movement" may in particular denote a signal from a single sensor or a combined signal originating from several sensors. Each sensor is capable of directly or indirectly measuring blade movement as a function of time, i.e. during operation.

In operation, a sensor signal is obtained and used to detect an oscillating blade movement. Depending on the particular detected blade movement, the adaptive flow regulating devices are individually controlled to reduce the detected oscillating rotor blade movement. This may in particular involve controlling a selected subset of the adaptive flow regulating devices to reduce undesirable movement of one or more sections of the rotor blade.

According to an embodiment of the invention, the step of detecting an oscillating rotor blade movement comprises filtering the sensor signal to detect an n-th mode of rotor blade movement.

In the present context, the term "n-th mode of rotor blade movement" may in particular denote an oscillating movement pattern along the rotor blade with n nodes or non-moving locations. In other words, the 1^{st} mode (i.e. n=1) corresponds to a movement pattern where no movement is present at a single location of the rotor blade (e.g. at the blade root), the 2^{nd} mode (n=2) corresponds to a movement pattern where no movement is present at two separate locations of the rotor blade (e.g. at the blade root and at the blade tip), the 3^{rd} mode (n=3) corresponds to a movement pattern where no movement is present at three separate locations of the rotor blade (e.g. at the blade root, at the blade midsection, and at the blade tip), and vice versa.

Each mode corresponds to a characteristic resonance frequency of the rotor blade and may thus be detected by appropriate filtering.

According to a further embodiment of the invention, the step of detecting an oscillating rotor blade movement further comprises determining amplitude and phase of the detected n-th mode of rotor blade movement.

With knowledge of the amplitude and phase of the detected n-th mode of rotor blade movement, the amount of flow regulation required by each single adaptive flow regulating device can be precisely determined.

According to a further embodiment of the invention, the step of controlling the adaptive flow regulating devices comprises actuating a first subset of the adaptive flow regulating devices to reduce or increase drag and/or lift on a corresponding first section of the rotor blade.

By adapting (i.e. reducing or increasing) drag on the first section of the rotor blade, blade movement in a direction influenced by the drag (i.e. in a direction essentially parallel to the rotor blade surface) can be effectively influenced. Similarly, by adapting lift on the first section of the rotor blade, blade movement in a direction influenced by the lift (i.e. in a direction essentially perpendicular to the rotor blade surface) can be effectively influenced.

According to a further embodiment of the invention, the first section is a tip section of the rotor blade when the detected n-th mode of rotor blade movement is a first mode, and the first section is midsection of the rotor blade when the detected n-th mode of rotor blade movement is a second mode.

According to a further embodiment of the invention, the step of controlling the adaptive flow regulating devices further comprises actuating a second subset of the adaptive flow regulating devices to reduce or increase drag and/or lift on a corresponding second section of the rotor blade.

The drag and/or lift on the second section of the rotor blade may in particular be reduced when the drag and/or lift on the first section of the rotor blade is increased, and increased when the drag and/or lift on the first section of the rotor blade is reduced. Thereby, the first and second segments may be influenced in opposite directions.

According to a further embodiment of the invention, the first section is located halfway between a root section of the rotor blade and a midsection of the rotor blade and the second section is located halfway between the midsection of the rotor blade and a tip section of the rotor blade when the detected n-th mode of rotor blade movement is a third mode. In other words, both the distance from the root section to the first section and the distance from the second section to the tip section are about one quarter (1/4) of the total length of the rotor blade.

According to a further embodiment of the invention, the detected oscillating rotor blade movement comprises oscillating movement in a direction parallel to a wind turbine rotor axis.

In this case, the oscillating movement causes the blades to bend and deflect out of the (ideal) rotor plane. These movement patterns are also referred to as "flap modes".

According to a further embodiment of the invention, the detected oscillating rotor blade movement comprises oscillating movement in a direction perpendicular to a wind turbine rotor axis.

In this case, the oscillating movement causes the blades to bend and deflect in the direction of rotation, i.e. in a direction perpendicular to the wind turbine rotor axis. These movement patterns are also referred to as "edge modes".

It is explicitly noted, that the various kinds of movement may occur simultaneously and may also be handled simultaneously by superposition of the relevant control signals to the adaptive flow regulating devices.

According to a second aspect of the invention, there is provided an arrangement for reducing oscillating movement in a wind turbine rotor blade, the rotor blade comprising a plurality of adaptive flow regulating devices arranged along the rotor blade. The arrangement comprises (a) at least one sensor for obtaining a sensor signal indicative of rotor blade movement, (b) a detector for detecting an oscillating rotor blade movement based on the sensor signal, and (c) a controller for controlling the adaptive flow regulating devices to reduce the detected oscillating rotor blade movement.

This aspect of the invention is based on essentially the same idea as the first aspect described above.

According to a further embodiment of the invention, the at least one sensor comprises an accelerometer, a strain sensor, and/or an optical sensor.

The accelerometer may be a 2D or 3D accelerometer arranged e.g. at a nacelle or rotor hub or the wind turbine.

The strain sensor may in particular be arranged along the rotor blade.

The optical sensor may be arranged at any position appropriate for detecting deflections of the rotor blade surface.

According to a further embodiment of the invention, the detector comprises at least one band pass filter centered at an eigenfrequency or resonance frequency of the rotor blade. Preferably, a band pass filter is provided with a center frequency corresponding to each relevant mode of oscillating rotor blade movement, e.g. a first band pass filter for the 1^{st} mode, a second band pass filter for the 2^{nd} mode, a third band pass filter for the 3^{rd} mode, and so on.

Depending on the circumstances, other kinds of filters or filtering algorithms may be used instead of a band pass filter.

According to a third aspect of the invention there is provided a wind turbine comprising an arrangement according to the second aspect or any of the embodiments thereof.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a block diagram of an arrangement according to an embodiment of the present invention.
Figure 2 to Figure 4 illustrate the principle of reducing various flap mode oscillations in accordance with embodiments of the present invention.
Figure 5 to Figure 7 illustrate the principle of reducing various edge mode oscillations in accordance with embodiments of the present invention.

### Detailed Description

The illustration in the drawing is schematic. It is noted that in different figures, similar or identical elements are provided with the same reference numerals or with reference numerals which differ only within the first digit.

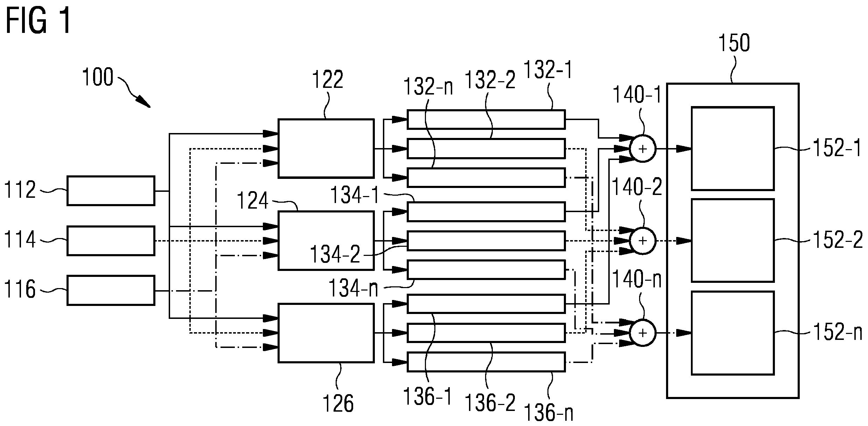

Figure 1 shows a block diagram of an arrangement 100 according to an embodiment of the present invention. More specifically, the arrangement 100 comprises sensors 112, 114, and 116 for providing respective sensor signals indicative of rotor blade movement to detectors 122, 124, and 126. The detectors 122, 124, 126 are adapted to detect, e.g. by band pass filtering around respective rotor blade eigenfrequencies, respective modes of oscillating rotor blade movement, such as a first mode, a second mode, and a third mode, based on the sensor signals. More detectors may be provided if more than three modes are to be detected. The respective outputs from detectors 122, 124, 126 are processed in order to generate control signals for controlling adaptive flow regulating devices 152-1, 152-2, ..., 152-n arranged along rotor blade 150.

More specifically, the output from detector 122, which may preferably be amplitude and phase of a first mode of oscillating blade movement, is supplied to respective transfer function calculating circuits 132-1, 132-2, ..., 132-n in order to determine appropriate control values for each of the adaptive flow regulating devices 152-1, 152-2, ..., 152-n in order to reduce the detected first mode of oscillating movement.

Similarly, the output signal from detector 124, which may preferably be amplitude and phase of a second mode of oscillating blade movement, is supplied to respective transfer function calculating circuits 134-1, 134-2, ..., 134-n in order to determine appropriate control values for each of the adaptive flow regulating devices 152-1, 152-2, ..., 152-n in order to reduce the detected second mode of oscillating movement. Furthermore, the output signal from detector 126, which may preferably be amplitude and phase of a third mode of oscillating blade movement, is supplied to respective transfer function calculating circuits 136-1, 134-6, ..., 136-n in order to determine appropriate control values for each of the adaptive flow regulating devices 152-1, 152-2, ..., 152-n in order to reduce the detected third mode of oscillating movement.

The control values for the first adaptive flow regulating device 152-1, i.e. the output values from transfer function calculating circuits 132-1, 134-1, and 136-1, are supplied to a first summing unit 140-1 and the resulting sum is supplied as a control signal to the first adaptive flow regulating device 152-1. The control values for the second adaptive flow regulating device 152-2, i.e. the output values from transfer function calculating circuits 132-2, 134-2, and 136-2, are supplied to a second summing unit 140-2 and the resulting sum is supplied as a control signal to the second adaptive flow regulating device 152-2. The control values for the n-th adaptive flow regulating device 152-n, i.e. the output values from transfer function calculating circuits 132-n, 134-n, and 136-n, are supplied to an n-th summing unit 140-n and the re-suiting sum is supplied as a control signal to the n-th adaptive flow regulating device 152-n.

As a result, the detected oscillating movements in the wind turbine rotor blade 150 are dampened (i.e. reduced or even eliminated).

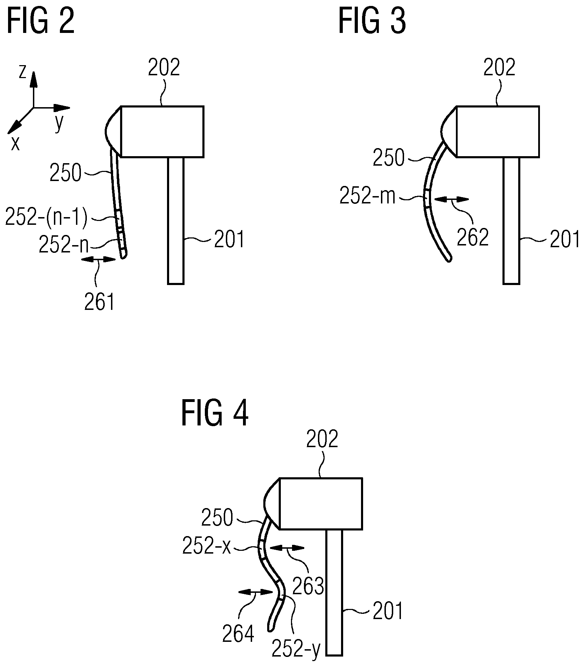

Figure 2 to Figure 4 illustrate the principle of reducing various flap mode oscillations in accordance with embodiments of the present invention. More specifically, Figure 2 shows the case of a first flap mode, Figure 3 shows a second flap mode, and Figure 4 shows a third flap mode in a rotor blade 250 of a wind turbine comprising a nacelle 202 arranged on top of a tower 201. As previously mentioned, a flap mode refers to a mode of oscillating movement in a direction parallel to the wind turbine rotor axis, i.e. in the direction of the y-axis indicated at the far left of Figure 2.

In Figure 2, the tip of the rotor blade 250 vibrates back and forth as indicated by arrow 261. When this oscillating movement, i.e. the first flap mode, is detected, the two adaptive flow regulating devices 252-(n-1) and 252-n arranged closest to the blade tip are controlled with the aim of reducing the movement 261. In the specific state shown in Figure 2, the adaptive flow regulating devices 252-(n-1) and 252-n are operated to dampen the movement towards the right (along the y-axis) or even to force the tip in the opposite direction, i.e. towards the left.

In Figure 3, the midsection of the rotor blade 250 vibrates back and forth as indicated by arrow 262. When this oscillating movement, i.e. the second flap mode, is detected, a corresponding adaptive flow regulating device 252-m that is arranged at the midsection of the blade 250 is controlled with the aim of reducing the movement 262. In the specific state shown in Figure 3, the adaptive flow regulating device 252-m is operated to dampen the movement toward the left or even to force the midsection in the opposite direction, i.e. towards the right.

In Figure 4, a first section on the upper half of the blade 250 is oscillating as indicated by arrow 263 while a second section on the lower half of the blade 250 is oscillating as indicated by arrow 264. As shown in Figure 4, the first and second sections oscillate in opposite directions, i.e. when the first section moves to the left, the second section moves to the right, and vice versa. Accordingly, corresponding adaptive flow regulating devices 252-x and 252-y are also operated to influence the movement in opposite directions. In other words, when adaptive flow regulating device 252-x is set to maximum, the adaptive flow regulating device 252-y is set to minimum, and vice versa.

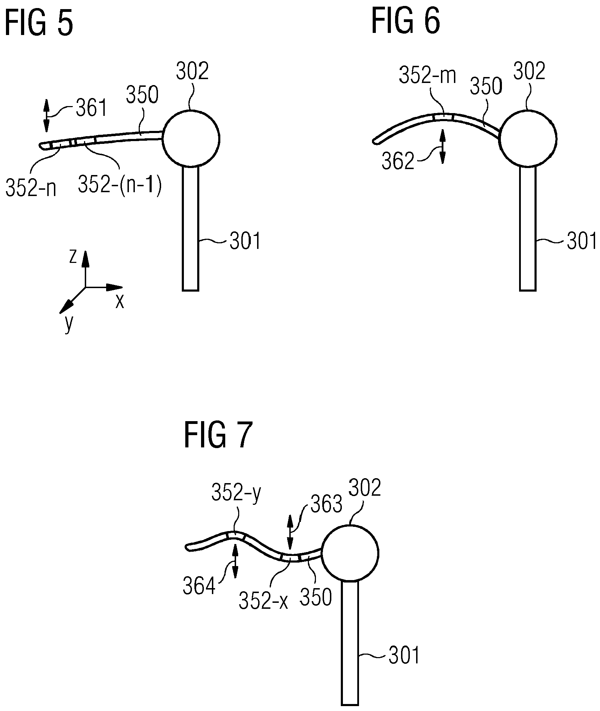

Figure 5 to Figure 7 illustrate the principle of reducing various edge mode oscillations in accordance with embodiments of the present invention. More specifically, Figure 5 shows the case of a first edge mode, Figure 6 shows a second edge mode, and Figure 7 shows a third edge mode in a rotor blade 350 of a wind turbine comprising a nacelle 302 arranged on top of a tower 301. As previously mentioned, an edge mode refers to a mode of oscillating movement in a direction perpendicular to the wind turbine rotor axis, i.e. in the x-z plane indicated at the far left of Figure 5.

In Figure 5, the tip of the rotor blade 350 vibrates up and down as indicated by arrow 361. When this oscillating movement, i.e. the first edge mode, is detected, the two adaptive flow regulating devices 352-(n-1) and 352-n arranged closest to the blade tip are controlled with the aim of reducing the movement 361. In the specific state shown in Figure 5, the adaptive flow regulating devices 352-(n-1) and 352-n are operated to dampen the downward movement (along the z-axis) or even to force the tip in the opposite direction, i.e. upwards.

In Figure 6, the midsection of the rotor blade 350 vibrates up and down as indicated by arrow 362. When this oscillating movement, i.e. the second edge mode, is detected, a corresponding adaptive flow regulating device 352-m that is arranged at the midsection of the blade 350 is controlled with the aim of reducing the movement 362. In the specific state shown in Figure 6, the adaptive flow regulating device 352-m is operated to dampen the upward movement or even to force the midsection in the opposite direction, i.e. downwards.

In Figure 7, a first section on the upper half of the blade 350 is oscillating as indicated by arrow 363 while a second section on the lower half of the blade 350 is oscillating as indicated by arrow 364. As shown in Figure 7, the first and second sections oscillate in opposite directions, i.e. when the first section moves downwards, the second section moves upwards, and vice versa. Accordingly, corresponding adaptive flow regulating devices 352-x and 352-y are also operated to influence the movement in opposite directions. In other words, when adaptive flow regulating device 352-x is set to maximum, the adaptive flow regulating device 352-y is set to minimum, and vice versa.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of reducing oscillating movement in a wind turbine rotor blade, the rotor blade comprising one or more adaptive flow regulating devices arranged along the rotor blade, the method comprising
obtaining a sensor signal indicative of rotor blade movement,
detecting an oscillating rotor blade movement based on the sensor signal, and
controlling the adaptive flow regulating devices to reduce the detected oscillating rotor blade movement.

2. The method according to the preceding claim, wherein the detecting comprises filtering the sensor signal to detect an n-th mode of rotor blade movement.

3. The method according to the preceding claim, wherein the detecting further comprises determining amplitude and phase of the detected n-th mode of rotor blade movement.

4. The method according to claim 2 or 3, wherein the controlling comprises actuating a first subset of the adaptive flow regulating devices to reduce or increase drag and/or lift on a corresponding first section of the rotor blade.

5. The method according to the preceding claim, wherein the first section is a tip section of the rotor blade when the detected n-th mode of rotor blade movement is a first mode, and wherein the first section is midsection of the rotor blade when the detected n-th mode of rotor blade movement is a second mode.

6. The method according to claim 4, wherein the controlling further comprises actuating a second subset of the adaptive flow regulating devices to reduce or increase drag and/or lift on a corresponding second section of the rotor blade.

7. The method according to the preceding claim, wherein the first section is located halfway between a root section of the rotor blade and a midsection of the rotor blade and the second section is located halfway between the midsection of the rotor blade and a tip section of the rotor blade when the detected n-th mode of rotor blade movement is a third mode.

8. The method according to any preceding claim, wherein the detected oscillating rotor blade movement comprises oscillating movement in a direction parallel to a wind turbine rotor axis.

9. The method according to any preceding claim, wherein the detected oscillating rotor blade movement comprises oscillating movement in a direction perpendicular to a wind turbine rotor axis.

10. An arrangement for reducing oscillating movement in a wind turbine rotor blade, the rotor blade comprising a plurality of adaptive flow regulating devices arranged along the rotor blade, the arrangement comprising
at least one sensor for obtaining a sensor signal indicative of rotor blade movement,
a detector for detecting an oscillating rotor blade movement based on the sensor signal, and
a controller for controlling the adaptive flow regulating devices to reduce the detected oscillating rotor blade movement.

11. The arrangement according to the preceding claim, wherein the at least one sensor comprises an accelerometer, a strain sensor, and/or an optical sensor.

12. The arrangement according to claim 10 or 11, wherein the detector comprises at least one band pass filter centered at an eigenfrequency of the rotor blade.

13. A wind turbine comprising an arrangement according to any of claims 10 to 12.
